# EUROPEAN PATENT APPLICATION

(11) **EP 4 382 370 A1**
(43) Date of publication of application: **12.06.2024**
(21) Application number: 22212370.5
(22) Date of filing: 08.12.2022
(51) Int. Cl.: B60S 1/38, B60S 1/52, B60S 1/56

(54) **WIPER BLADE HAVING A SPRAYING DEVICE**

(71) Applicant: Valeo Systèmes d'Essuyage, 78322 Le Mesnil Saint Denis (FR)
(72) Inventor: SPIECHA, Antoni, 32 050 Skawina (PL)
(74) Representative: Valeo Visibility

(57) **Abstract**

The present invention relates to a wiper blade (100) for a vehicle, comprising: a body (110) that extends in a longitudinal direction; at least one conduit configured to convey washing fluid along at least a portion of the body (110); and a spraying device (105, 105a, 105b). The spraying device (105, 105a, 105b) is configured to receive the washing fluid and spray a jet of the washing fluid over an optical surface of a detection device, wherein the spraying device (105, 105a, 105b) comprises at least one fluid distribution channel (130, 143a, 143b) fluidically connected to the at least one conduit. The spraying device (105, 105a, 105b) comprises a jet extending element (135, 144a, 144b) positioned at a downstream end of the at least one fluid distribution channel (130, 143a, 143b) and configured to extend the jet of the washing fluid at the downstream end.

## Description

### TECHNICAL FIELD

The present invention relates to a wiper blade comprising a spraying device for cleaning detection devices intended for a motor vehicle, and to a vehicle wiper system.

### STATE OF THE ART

Motor vehicles are equipped with detection devices to collect information related to the environment of the motor vehicles, in particular in order to provide the driver with assistance in maneuvering the vehicle. For instance, cameras or other sensors, such as infrared image sensors, are increasingly incorporated into modern vehicles to provide additional information to the driver. To this end, the detection devices are commonly installed on the vehicle in such a way as to collect information on the environment in front, on the environment to the rear and on the environment to the sides of the vehicle. The detection devices are therefore conventionally installed on the front face and/or on the rear face and/or on a rear-view mirror of the vehicle. The detection devices may be exposed to the fouling as from dirty water, dust or other types of sprays. Separate cleaning systems are conventionally employed to clean the detection devices by spraying a jet of a washing fluid to reduce or eliminate the build-up of obstructive debris on optical surfaces of the detection devices.

In some of the known cleaning systems, the jet of washing fluid that is being sprayed is often aimed only at a single impact zone, such that the washing fluid does not act evenly over the entire optical surface to be cleaned. In other some known cleaning systems, one or more movable nozzles may be employed to cover a larger portion of the optical surface. For instance, the movement of the nozzle(s) may be controlled by a motor or the like. Thus, the known cleaning systems employing the movable nozzles are complex and costly.

### SUMMARY OF THE INVENTION

An object of the present invention is to alleviate the problems raised above. To be more precise, an object of the present invention is to provide a wiper blade comprising a spraying device, which can effectively clean a larger portion of an optical surface of a detection device installed on a motor vehicle.

**To** achieve these objectives, the present invention provides a wiper blade for a vehicle, comprising: a body that extends in a longitudinal direction; at least one conduit configured to convey a washing fluid along at least a portion of the body; and a spraying device configured to receive the washing fluid and spray a jet of the washing fluid over an optical surface of a detection device, wherein the spraying device comprises at least one fluid distribution channel fluidically connected to the at least one conduit. The spraying device further comprises a jet extending element positioned at a downstream end of the at least one fluid distribution channel and configured to create a disturbance in the jet of the washing fluid at the downstream end such that the jet is widened or extended or enlarged. Advantageously, the jet extending element would facilitates to generate an enlarged jet of the washing fluid from the spraying device. Thus, the enlarged jet of the washing fluid that exits the spraying device would be sprayed over the larger portion of the optical surface, thereby the larger portion of the optical surface can be cleaned effectively.

According to one characteristic of the present invention, the jet extending element is configured to extend the jet of washing fluid at least radially with respect to a central axis of the downstream end of the at least one fluid distribution channel.

According to one characteristic of the present invention, the jet extending element comprises a truncated shaped passage.

According to one characteristic of the present invention, the truncated shaped passage has a circular, elliptical, oval, or triangular base. Advantageously, the truncated shaped passage would facilitate to generate the enlarged jet of the washing fluid from the spraying device. In other words, the jet that is being discharging out from the spraying device may have a wider spray angle, and thereby a larger surface area of the jet. The spray angle is defined as an opening angle at which the washing fluid discharges from a discharge orifice, i.e., the truncated shaped passage. An increase in the spray angle would results in generating smaller droplets of the washing fluid, thereby resulting in generating a mist type spray of the washing fluid, for example. In an aspect, different types of spray patterns of the washing fluid can be generated by having different bases of the truncated shaped passage.

According to one characteristic of the present invention, the jet extending element comprises a flow dividing element configured to divide a single jet of the washing fluid entering at an upstream end of the at least one fluid distribution channel into one or more output jets of the washing fluid discharging from the downstream end of the corresponding fluid distribution channel.

According to one characteristic of the present invention, the flow dividing element comprises at least one beam element positioned at least partially across an opening of the at least one fluid distribution channel at its downstream end.

According to one characteristic of the present invention, the flow dividing element comprises a plurality of beam elements, that may be arranged in different directions, at least partially across an opening of the at least one fluid distribution channel at its downstream end. In an aspect, the plurality of beam elements may be arranged to form as a grid or a fence including a plurality of small orifices, which facilitates to generate a mist type spray or a foam type spray of the washing fluid. In other words, the plurality of small orifices breaks the single jet of the washing fluid into multiple droplets and forms as the mist or the foam. The single jet of washing fluid entering at the upstream end of the at least one fluid distribution channel advances through the at least one fluid distribution channel and emerges out from the plurality of small orifices at a higher pressure in the form of the mist or the foam.

According to one characteristic of the present invention, the spraying device comprises two fluid distribution channels fluidically connected to the at least one conduit. A first fluid distribution channel is fluidically connected to a first jet extending element at a downstream end of the first fluid distribution channel to spray a first jet of washing fluid over the optical surface; and a second fluid distribution channel is fluidically connected to a second jet-extending element at a downstream end of the second fluid distribution channel to spray a second jet of washing fluid over the optical surface.

According to one characteristic of the present invention, the first and the second jet extending elements are the same.

According to one characteristic of the present invention, the first and the second jet extending elements are different.

According to one characteristic of the present invention, the spraying device comprises a fluid flow control element arranged on at least a portion of the at least one fluid distribution channel, and configured to modify the flow of the washing fluid passing through the at least one fluid distribution channel such that turbulences in the flow are limited. Therefore, the flow tend to be laminar. The flow may be more laminar.

According to one characteristic of the present invention, the present invention is also related to a windscreen wiping system comprising at least the wiper blade as has just been presented, and a wiper arm to drive the wiper blade.

According to one characteristic of the present invention, the present invention is also related to a motor vehicle comprising the windscreen wiping system as has just been presented.

Further advantages, features and details of the invention will be apparent from the following description of preferred embodiments of the invention and from the drawings.

### BRIEF DESCRIPTION OF THE INVENTION

**To** complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
Fig.1 shows a perspective view of a wiper blade having a spraying device, according to an embodiment of the present invention.
Fig.2a shows an end cap of the wiper blade shown in the Fig.1.
Fig.2b shows a cross-sectional view of the end cap shown in the Fig.2a.
Fig.3a is a view of the end cap having a spraying device for spraying a horizontal oval shaped pattern of washing fluid, according to an embodiment of the present invention.
Fig.3b is a view of the end cap having a spraying device for spraying a vertical oval shaped pattern of the washing fluid, according to an embodiment of the present invention.
Fig.4a is a cross sectional view of an end cap having a spraying device comprising two fluid distribution channels, according to another embodiment of the present invention.
Fig.4b is a view of an end cap having a spraying device for spraying two horizontal oval shaped patterns of the washing fluid, according to another embodiment of the present invention.
Fig.4c is a view of an end cap having a spraying device for spraying two vertical oval shaped patterns of the washing fluid, according to another embodiment of the present invention.
Fig.4d is a view of an end cap having a spraying device for spraying a horizontal oval shaped pattern of the washing fluid and a vertical oval shaped pattern of the washing fluid, according to another embodiment of the present invention.
Fig.5a is a view of an end cap having a spraying device comprising a flow dividing element having at least one beam element, according to another embodiment of the present invention.
Fig.5b is a view of an end cap having a spraying device comprising a flow dividing element having a plurality of beam elements, according to another embodiment of the present invention.
Fig.6 is a view of an end cap having a spraying device comprising a fluid flow control element having at least one flow disturbing member, according to another embodiment of the present invention.
Fig.7a is a view of an end cap having a spraying device comprising a fluid flow control element having a rifling pattern, according to another embodiment of the present invention.
Fig.7b is a cross sectional view of the spraying device shown in the Fig.7a.
Fig.8 is a view of an end cap having a spraying device comprising two fluid distribution channels of funnel shaped, according to another embodiment of the present invention.

### DETAILED DESCRIPTION OF THE INVENTION

The description set forth below in connection with the appended drawings is intended as a description of various embodiments of the disclosed subject matter and is not necessarily intended to represent the only embodiment(s). In certain instances, the description includes specific details for the purpose of providing an understanding of the disclosed subject matter. However, it will be apparent to those skilled in the art that embodiments may be practiced without these specific details. In some instances, well known structures and components may be shown in block diagram form in order to avoid obscuring the concepts of the disclosed subject matter.

Reference throughout the specification to "one embodiment" or "an embodiment" means that a particular feature, structure, characteristic, operation, or function described in connection with an embodiment is included in at least one embodiment of the disclosed subject matter. Thus, any appearance of the phrases "in one embodiment" or " in an embodiment" in the specification is not necessarily referring to the same embodiment. Further, the particular features, structures, characteristics, operations, or functions may be combined in any suitable manner in one or more embodiments. Further, it is intended that embodiments of the disclosed subject matter can and do cover modifications and variations of the described embodiments.

It should also be noted that, in the following description, the designations "upstream" and "downstream" refer to the direction of flow of the fluids whether they are cleaning or drying fluids, in the cleaning device according to the invention. Thus, the designation "upstream" refers to the side of the device according to the invention through which these fluids are admitted into it, and the designation "downstream" refers to the side of the device according to the invention through which the fluids are dispensed out of it, in particular toward an optical surface of a detection device of a motor vehicle.

Motor vehicles are equipped with detection devices to collect information related to the environment of the motor vehicle, in particular in order to provide the driver with assistance in the driving and/or the maneuvering of the vehicle. It will be appreciated that, without departing from the scope of the invention, the motor vehicle may include a number of sensors, devices, and/or systems that are capable of assisting in driving operations. Examples of the various sensors and systems may include, but are in no way limited to, one or more of cameras (e.g., independent, stereo, combined image, etc.), infrared (IR) sensors, radio frequency (RF) sensors, ultrasonic sensors (e.g., transducers, transceivers, etc.), RADAR sensors (e.g., object-detection sensors and/or systems), LIDAR systems, odometry sensors and/or devices (e.g., encoders, etc.), orientation sensors (e.g., accelerometers, gyroscopes, magnetometer, etc.), navigation sensors and systems (e.g., GPS, etc.), and other ranging, imaging, and/or object-detecting sensors. The sensors may be disposed in an interior space of the vehicle and/or on an outside of the vehicle. In some embodiments, the sensors and systems may be disposed in one or more portions of a vehicle (e.g., the frame, a body panel, a compartment, etc.).

Referring now to the drawings, wherein like reference numerals designate identical or corresponding parts throughout the several views. Hereinafter, exemplary embodiments of the present disclosure will be described in detail based on the drawings.

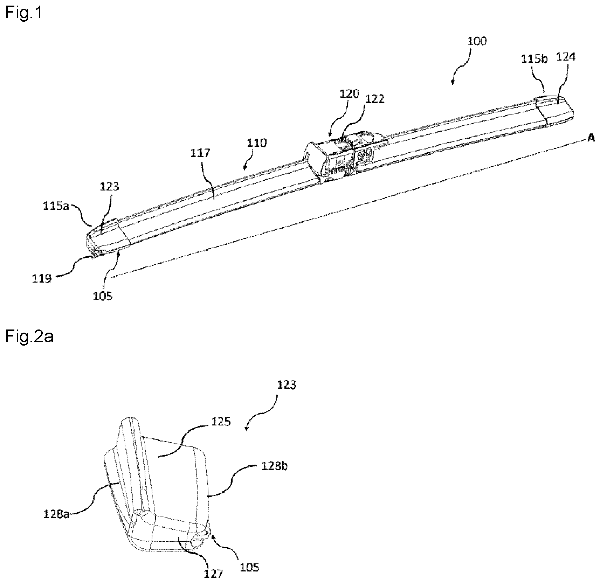

Fig.1 shows a perspective view of a wiper blade having a spraying device, according to an embodiment of the present invention. The wiper blade 100 shown in the Fig.1 is intended to be mounted on an outer face of a window of a vehicle, wherein this window may be a front windscreen or a rear windscreen of the vehicle.

**The** wiper blade 100 comprises a spraying device 105 configured to project the washing fluid over an optical surface of a detection device (not shown in Figures) installed on a motor vehicle. The washing fluid may be contained in a reservoir installed on the vehicle and is circulated to the wiper blade 100 by a pump and/or a module for managing the circulation of the washing fluid. The spraying device 105 is configured to spray a jet of washing fluid over the optical surface for performing cleaning of the optical surface. In an aspect, the detection device may be located at partially on an inner face of a windshield of the vehicle or in the vicinity of the windshield. For instance, the detection device may be located at a top area of the windshield or in the vicinity of the top area of the windshield. The top area may be a portion of a vehicle roof area which is located closer to a top edge of the windshield.

Referring to the Fig.1, the wiper blade 100 comprises a body 110 that extends along a longitudinal direction 'A' marked on the Fig.1. The wiper blade 100 is terminated by two longitudinal ends, namely, a first longitudinal end 115a and a second longitudinal end 115b. The second longitudinal end 115b of the wiper blade 100 is that which is closest to the rotation point of an arm (not shown in Figures) carrying the wiper blade 100, while the first longitudinal end 115a is opposite to the second longitudinal end 115b, in relation to the body 110 of the wiper blade 100.

According to an exemplary embodiment, the wiper blade 100 may be of the scraper and spreader beam type. It may also be a flat blade type.

Substantially in the center of the wiper blade 100, a means 120 for fixing the wiper blade 100 to the arm which generates its movement, in particular its rotation is arranged. This fixing means 120 comprises at least one adapter 122 connected by a pivot link to a connector (not shown in Figures). The adapter 122 may be configured to provide mechanical connection between the wiper blade 100 and the arm. Such an adapter 122 is consequently a part of which the shape can be modified according to the shape of an end portion of the arm, for example a straight end, a hook shape, or having a pivot finger and one or more fixing lugs. The fixing means 120 may be configured to form the entry point of the washing fluid in the wiper blade 100.

The wiper blade 100 further comprises a support housing (not shown in Figures), at least one stiffening spline (not shown in Figures), at least one air deflector 117 (shown in Fig.1), and a wiping strip 119 (shown in Fig.1).

The wiper blade 100 further comprises an end cap 123 mounted at a longitudinal end, for example, the first longitudinal end 115a of the wiper blade 100. The spraying device 105 is being arranged in the end cap 123. The end cap 123 threads over the first longitudinal end 115a of the wiper blade 100 and comes to rest against this. The second longitudinal end 115b of the wiper blade 100 may be fixed with another end cap 124 (shown in the Fig.1). In an aspect, the end cap 123 that is configured to be fixed over the first longitudinal end 115a of the wiper blade 100 is designed to integrate the spraying device 100, and the other end cap 124 that is configured to be fixed over the second longitudinal end 115b of the wiper blade 100 may be similar to the conventional end cap known to a person skilled in the art.

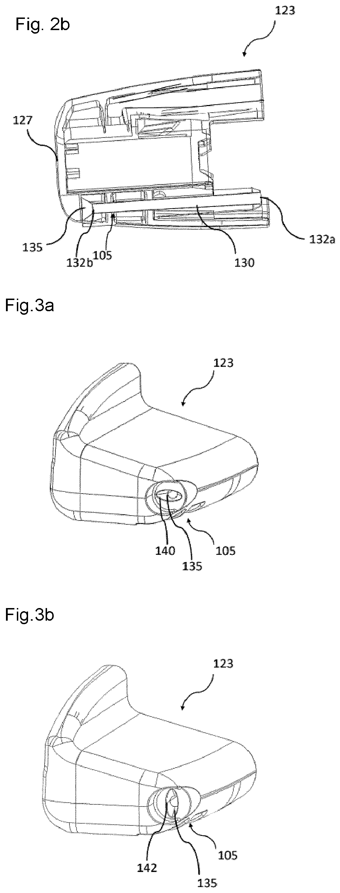

Fig.2a shows an end cap of the wiper blade shown in the Fig.1, and Fig.2b shows a cross-sectional view of the end cap shown in the Fig.2a. The end cap 123 shown in the Fig.2a comprises a top wall 125 defining an open volume housing at least the air deflector 117 of the wiper blade 100. The shape of the top wall 125 is thus complementary to the outer shape of the air deflector 117. The end cap 123 is terminated by a rear wall 127 which joins lateral walls 128a, 128b of the end cap 123.

The wiper blade 100 further comprises at least one conduit (not shown in Figures) configured to convey the washing fluid along at least a portion of the body 110. As previously mentioned, the spraying device 105 is arranged inside the end cap 123. The spraying device 105 shown in the Fig.2a and the Fig.2b is configured to receive the washing fluid and spray a jet of the washing fluid over the optical surface of the detection device. The spraying device 105 may be fluidically connected to the at least one conduit. The spraying device 105 comprises at least one fluid distribution channel 130 having an upstream end 132a and a downstream end 132b. Although the Fig.2b shows the spraying device 105 with a single fluid distribution channel 130, it is understood that the spraying device 105 can have multiple fluid distribution channels. In an example, the wiper blade 100 may comprise two conduits in which a first conduit may be fluidically connected to the at least one fluid distribution channel 130 to perform cleaning of the optical surface, and a second conduit may be arranged to convey the washing fluid to a plurality of nozzles arranged along the body 110 of the wiper blade 100 to perform the cleaning of the windshield.

According to an exemplary embodiment, the at least one conduit may be formed by a separate tube fixed to the wiper blade 100, so as to supply the washing fluid to the spraying device 105. According to another exemplary embodiment, the at least one conduit may be formed by a tube arranged inside one of the constituent elements of the wiper blade 100, as will be explained below. In either of the alternatives mentioned above, the at least one conduit is in communication with the spraying device 105. Throughout the description, and whichever elements are in communication, such an expression in general means that the at least one conduit is connected directly or indirectly to the spraying device 105, such that the washing fluid passing through the at least one conduit can reach the spraying device 105 being sprayed over the optical surface of the detection device.

According to an embodiment of the present invention, the spraying device 105 is configured to effectively clean a larger portion of an optical surface of the detection device. For this, the spraying device 105 is provided with a jet extending element 135 (shown in Fig.2b) positioned at a downstream end 132b of the at least one fluid distribution channel 130. The jet extending element 135 is configured to create a disturbance in the jet of the washing fluid at the downstream end 132b in order to widen the jet. The jet extending element 153 may be configured to extend the jet of washing fluid at least radially with respect to a central axis of the downstream end 132b of the at least one fluid distribution channel 130. In an aspect, the jet extending element 130 comprises a truncated shaped passage. For example, the truncated shaped passage is a conical shaped passage. Further, the truncated shaped passage may have a circular, elliptical, oval, or triangular base. That is to say, the truncated shaped passage may have one of a circular shape, an elliptical shape, an oval shape and a triangular shape at its downstream end. It is understood to a person skilled in the art that the different shapes of washing fluid jets can be produced by having different bases of the truncated shaped passage at its downstream end. In one non-limiting example, the truncated shaped passage has a horizontal oval shape 140 at its downstream end as can be seen from the Fig.3a, so that the spraying device 105 can spray a horizontal oval shaped pattern of the washing fluid over the optical surface. In another non-limiting example, the truncated shaped passage has a vertical oval shape 142 at its downstream end as can be seen from the Fig.3b, so that the spraying device 105 can spray a vertical oval shaped pattern of the washing fluid over the optical surface. For the purpose of brevity, the spraying device 105 comprising the truncated shaped passage having the horizontal oval shape base 140 and the vertical oval shape base 142 are shown in Fig.3a and Fig.3b, respectively. However, it is understood that the spraying devices having the truncated shaped passages with different bases may be realized.

Advantageously, the jet extending element 135 would facilitates to generate an enlarged jet of the washing fluid from the spraying device 105. The enlarged jet of the washing fluid that exist the spraying device 105 may have a wider spray angle, and thereby having a larger surface area of the washing fluid jet. An increase in the spray angle would results in generating smaller droplets of the washing fluid, thereby resulting in forming a mist type spray or a foam type spray, for example. Thus, the enlarged jet of the washing fluid that exits the spraying device 105 would be sprayed over the larger portion of the optical surface, thereby the larger portion of the optical surface can be cleaned effectively.

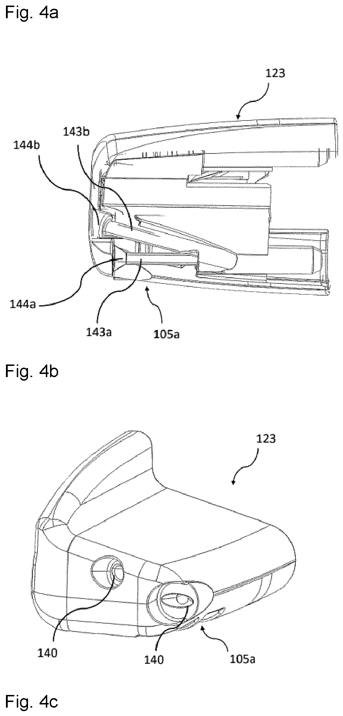

According to another embodiment of the present invention, the spraying device may comprise two fluid distribution channels and two jet extending elements. FIG.4a is a cross sectional view of an end cap having a spraying device comprising two fluid distribution channels, according to another embodiment of the present invention. As can be seen from the Fig.4a, the spraying device 105a comprises two fluid distribution channels, namely, a first fluid distribution channel 143a and a second fluid distribution channel 143b. In an aspect, both the first fluid distribution channel 143a and the second fluid distribution channel 143a may be in communication with the at least one conduit to receive the washing fluid. In one example, the second fluid distribution channel 143b may be arranged at an angle with respect to an axis defined by the first fluid distribution channel 143a. In another example, the second fluid distribution channel 143b may be arranged aside the first fluid distribution channel 143a. Advantageously, the spraying device 105a with two fluid distribution channels can spray the jet of washing fluids over two different portions of the optical surface, thereby the larger portion of the optical surface can be cleaned compared to the spraying device having a single fluid distribution channel.

Further, the spraying device 105a shown in the Fig.4a comprises a first jet extending element 144a arranged at a downstream end of the first fluid distribution channel 143a to spray a first jet of washing fluid over the optical surface. A second jet extending element 144b arranged at a downstream end of the second fluid distribution channel 143b to spray a second jet of washing fluid over the optical surface. Further, the first jet extending element 144a comprises a first truncated shaped passage and the second jet extending element 144b comprises a second truncated shaped passage.

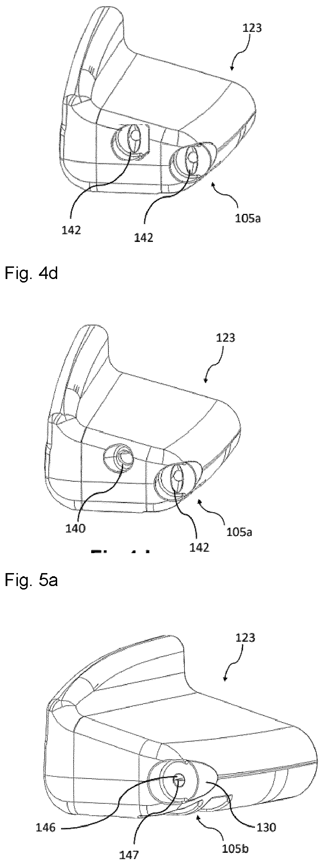

Fig.4b is a view of an end cap having a spraying device for spraying two horizontal oval shaped patterns of washing fluid, according to another embodiment of the present invention. Fig.4c is a view of an end cap having a spraying device for spraying two vertical oval shaped patterns of washing fluid, according to another embodiment of the present invention.Fig.4d is a view of an end cap having a spraying device for spraying a horizontal oval shaped pattern of washing fluid and a vertical oval shaped pattern of washing fluid, according to another embodiment of the present invention.

In one non-limiting example, both the first truncated shaped passage and the second truncated shaped passage of the spraying device 105a may have a horizontal oval shape 140 at their downstream ends, as can be seen from the Fig.4b, so that the spraying device 150 can spray two horizontal oval shaped patterns of the washing fluid over the optical surface. In another non-limiting example, both the first truncated shaped passage and the second truncated shaped passage of the spraying device 105a may have a vertical oval shape 142 at their downstream ends, as can be seen from the Fig.4c, so that the spraying device 100 can spray two vertical oval shaped patterns of the washing fluid over the optical surface. In another non-limiting example, the first truncated shaped passage of the spraying device 105a has the horizontal oval shape 140 at its downstream end and the second truncated shaped passage of the spraying device 105a has the vertical oval shape 142 at its downstream end, as can be seen from the Fig.4d, so that the spraying device 105 can spray both the horizontal oval shaped pattern of the washing fluid and the vertical oval shaped pattern of the washing fluid over the optical surface. Although the Fig.4b to Fig.4d illustrates the spraying devices 105a having the truncated shaped passages comprising the horizontal oval shaped base and/or the vertical oval shaped base, it is understood that the truncated shaped passages may have other shapes at their downstream ends, for example, circular, elliptical, or triangular.

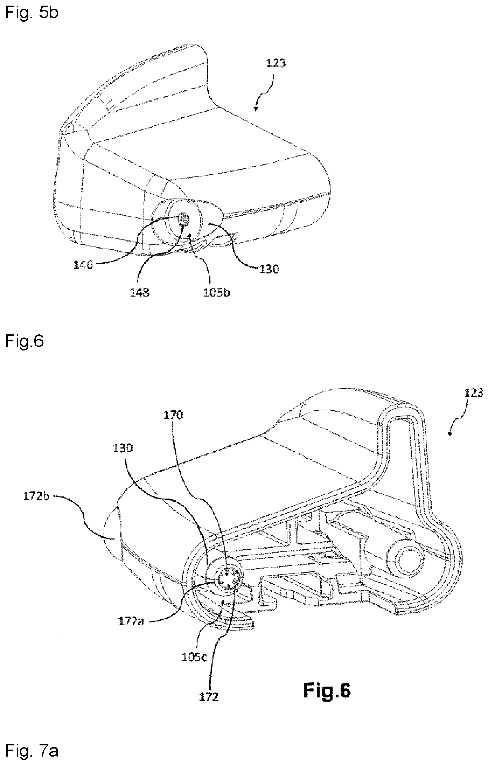

According to another embodiment of the present invention, the larger portion of the optical surface of the detection device can be effectively cleaned by providing a spraying device with a flow dividing element. Fig.5a is a view of an end cap having a spraying device comprising a flow dividing element having at least one beam element, according to another embodiment of the present invention. Fig.5b is a view of an end cap having a spraying device comprising a flow dividing element having a plurality of beam elements, according to another embodiment of the present invention. As can be seen from the Fig.5a and the Fig.5b, the spraying device 105b is provided with the flow dividing element, which may be arranged across an opening 146 of the at least one fluid distribution channel 130 at its downstream end.

The flow dividing element is configured to divide a single jet of the washing fluid entering at the upstream end of the at least one fluid distribution channel 130 into one or more output jets of the washing fluid discharging from the downstream end 132b of the corresponding fluid distribution channel 130. In one non-limiting example, the flow dividing element comprises at least one beam element 147 positioned at least partially across the opening 146 of the at least one fluid distribution channel 130 at its downstream end, as can be seen from the Fig.5a. In another non-limiting example, the flow dividing element comprises a plurality of beam elements 148 arranged in different directions at least partially across the opening 146 of the at least one fluid distribution channel 130 at its downstream end, as can be seen from the Fig.5b. For instance, the plurality of beam elements 148 may be arranged to form as a fence or a grid, at the opening 146 of the at least one fluid distribution channel 130 at its downstream end. The grid includes a plurality of small orifices, which facilitates to generate a mist type spray or a foam type spray of the washing fluid. That is to say, the plurality of small orifices breaks the single jet of the washing fluid into multiple droplets and forms as the mist or the foam. The single jet of washing fluid entering at the upstream end advances through the at least one fluid distribution channel 130 and discharges out from the plurality of small orifices at a higher pressure in the form of the mist or the foam. Advantageously, by having the flow dividing element, the spraying device 105 can spray the mist type spray or the foam type spray of the washing fluid over the optical surface so that the larger portion of the optical surface can be cleaned effectively.

Advantageously, the spraying device of the above disclosed embodiments can effectively perform the cleaning of the larger portion of the optical surface. Hence, with the present invention, effective cleaning of the optical surface can be realized with lesser parts and at minimum cost.

Following embodiments of the present invention are related to a spraying device, which is configured to generate and spray a powerful jet of a washing fluid for effective cleaning of the optical surface of the detection device. To obtain the powerful jet of the washing fluid, the spraying device is provided with a fluid flow control element. Fig.6 is a view of an end cap of a spraying device comprising a fluid flow control element having at least one flow disturbing member, according to another embodiment of the present invention.

As can be seen from the Fig.6, the spraying device 105c is arranged in the end cap 123. The spraying device 105c comprises a fluid flow control element 170 arranged on at least a portion of the at least one fluid distribution channel 130. The fluid flow control element may be configured to modify the flow of the washing fluid passing through the at least one fluid distribution channel 130 in order to limit turbulences in the flow. In other words, the fluid flow control element 170 may be arranged to protrude into the pathway of the washing fluid inside the at least one fluid distribution channel 130 to modify the flow. For instance, the fluid flow control element 170 helps to increase the velocity of the washing fluid, thereby resulting in obtaining the powerful jet of the washing fluid.

The fluid flow control element 170 shown in the Fig.6 comprises the at least one flow disturbing member 172 arranged at an upstream portion 172a of the at least one fluid distribution channel 130. Although the Fig.6 shows the arrangement of the at least one flow disturbing member 172 at the upstream portion 172a, it is also possible that that the at least one flow disturbing member 130 may be arranged at a downstream portion 172b of the at least one fluid distribution channel 130. In another aspect, the at least one flow disturbing member 172 may be arranged between the upstream portion 172a and the downstream portion 172b of the at least one fluid distribution channel 130. In another aspect, the at least one flow disturbing member 172 may be randomly positioned along the path of the washing fluid inside the at least one fluid distribution channel 130.

**As** can be seen from the Fig.6, the at least one flow disturbing member 172 is arranged circumferentially on an inner wall (not shown in Figures) of the at least one fluid distribution channel 130. In one aspect, at least one flow disturbing member 172 may be disposed symmetrically about the circumference of the inner wall. In another aspect, the at least one flow disturbing member 172 may be disposed non-symmetrically about the circumference of the inner wall.

For example, the at least flow disturbing members 170 are vanes having a wing-shaped cross section. The vanes 170 may be configured to convert the pressure energy of the washing fluid into the momentum energy. The vanes may pre-swirl the washing fluid entering the at least one fluid distribution channel 130. This might change the characteristics of the washing fluid that passes through the at least one fluid distribution channel 130. For instance, the pre-swirl of the washing fluid caused by the vanes may increase the velocity of the washing fluid that passes through the at least one fluid distribution channel 130. This would help to discharge the powerful jet of the washing fluid from the spraying device 105c. The powerful jet of the washing fluid that exits the spraying device 105s would be sprayed over the optical surface.

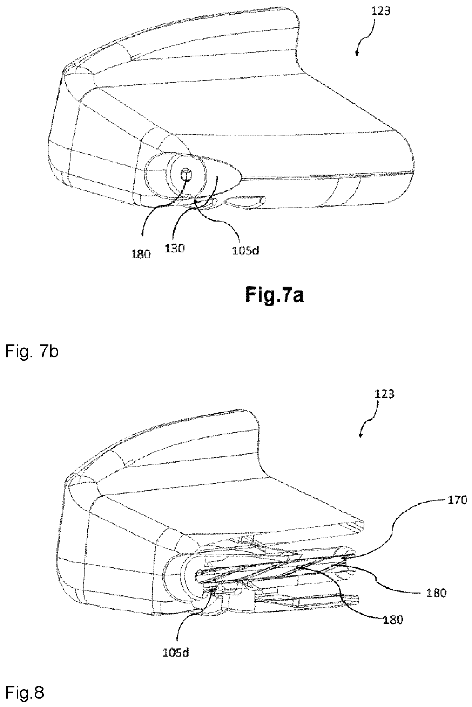

Fig.7a is a view of an end cap having a spraying device comprising a fluid flow control element having a rifling pattern, according to another embodiment of the present invention. Fig.7b is a cross sectional view of the spraying device shown in the Fig.7a. According to another embodiment of the present invention, the spraying device 105d having the fluid flow control element comprises a rifling pattern 180 formed on at least a portion of the inner wall of the at least one fluid distribution channel 130. The rifling pattern comprises a plurality of alternating lands and grooves. In an aspect, the plurality of alternating lands and grooves may extend at an angle with respect to a longitudinal direction of the at least one fluid distribution channel 130. In another aspect, the plurality of alternating lands and grooves may extend along the longitudinal direction of the at least one fluid distribution channel 130. These lands and grooves may be engraved on the inner wall of the corresponding fluid distribution channel 130.

Advantageously, the rifling pattern 180 helps to impart spinning motion to the washing fluid along the longitudinal direction of the at least one fluid distribution channel 130. Therefore, the washing fluid would travel at a higher velocity through the at least one fluid distribution channel 130. This would help to discharge the powerful jet of the washing fluid from the spraying device 105d. The powerful jet of the washing fluid that exits the spraying device 105s would be sprayed over the optical surface in order to clean the optical surface. An amount of energy that is consumed to generate the powerful jet of the washing fluid by means of the fluid flow control element, for example, the rifling pattern, would be less compared to an amount of energy that is consumed to generate the same powerful jet using a fluid distribution channel without the fluid flow control element.

According to another embodiment of the present invention, the flow of the washing fluid through the at least one fluid distribution channel may be controlled by having a funnel shaped distribution channel. The funnel shaped distribution channel helps to generate the powerful jet of the washing fluid.

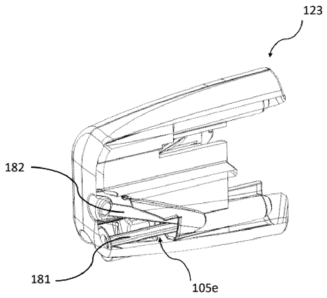

Fig.8 is a view of an end cap having a spraying device comprising two fluid distribution channels of funnel shaped, according to another embodiment of the present invention. As can be seen from the Fig.8, the spraying device 105e comprises two fluid distribution channels 181, 182 which are of funnel shaped.

In one aspect, cross sections of a first fluid distribution channel 181 and a second fluid distribution channel 182 decreases in the direction towards the upstream end from the downstream end.

In another aspect, the cross sections of the first fluid distribution channel 181 and the second fluid distribution channel 182 increases in the direction towards the upstream end from the downstream end.

Yet, in another aspect, the cross section of the first fluid distribution channel 181 increases in the direction towards the upstream end from the downstream end, and the cross section of the second fluid distribution channel 182 decreases in the direction towards the upstream end from the downstream end.

Further, in another aspect, the cross section of the first fluid distribution channel 181 decreases in the direction towards the upstream end from the downstream end, and the cross section of the second fluid distribution channel 182 increases in the direction towards the upstream end from the downstream end.

According to another embodiment, a spraying device comprises the jet extending element and the fluid flow control element. For instance, the spraying device comprises two fluid distribution channels. The jet extending element may be arranged at a downstream end of a first fluid distribution channel and configured to extend the jet of the washing fluid at the downstream end. The fluid flow control element may be arranged on at least a portion of a second fluid distribution channel, and configured to modify the flow of the washing fluid passing through the second fluid distribution channel in order to limit the turbulences in the flow and tend to a laminar flow. Thus, the spraying device can spray the powerful jet of the washing fluid over the optical surface and also the larger portion of the optical surface can be cleaned effectively by the washing fluid.

According to another embodiment, the present invention is also related to a windscreen wiping system comprising at least the wiper blade shown in the Fig.1, and a wiper arm to drive the wiper blade.

According to another embodiment, the present invention is also related to a motor vehicle comprising the windscreen wiping system.

The person skilled in the art realizes that the present invention by no means is limited to the preferred embodiments described above. On the contrary, many modifications and variations are possible within the scope of the appended claims. In addition, the skilled person readily realizes that the different embodiments described herein may be combined freely to obtain new combinations.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantages.

### LIST OF REFERENCE SIGNS

- 100: Wiper blade
- 105, 105a-105e: Spraying devices
- 110: Body of the wiper blade
- 115a: First longitudinal end of the wiper blade
- 115b: Second longitudinal end of the wiper blade
- 117: Air deflector
- 119: Wiping strip
- 120: Fixing means
- 122: Adapter
- 123, 124: End caps
- 125: Top wall of end cap
- 127: Rear wall of end cap
- 128a, 128b: Lateral walls of end cap
- 130: Fluid distribution channel
- 132a: upstream end of the fluid distribution channel
- 132b: downstream end of the fluid distribution channel
- 135: Jet extending element
- 140: Horizontal oval shaped base
- 142: Vertical oval shaped base
- 143a: First fluid distribution channel
- 143b: Second fluid distribution channel
- 144a: First jet extending element
- 144b: Second jet extending element
- 146: Opening
- 147: at least one beam element
- 148: Plurality of beam elements
- 170: Fluid flow control element
- 172: Flow disturbing member
- 172a: upstream portion of a fluid distribution channel 130 of the spraying device
- 105c 172a: downstream portion of a fluid distribution channel 130 of the spraying device
- 105c 180: Rifling pattern
- 181: First distribution channel of spraying device 105e
- 182: Second distribution channel of spraying device 105e

## Claims

1. A wiper blade (100) for a vehicle, comprising:
- a body (110) that extends in a longitudinal direction;
- at least one conduit configured to convey washing fluid along at least a portion of the body (110);
- a spraying device (105, 105a, 105b, 105c, 105d, 105e) configured to receive the washing fluid and spray a jet of the washing fluid over an optical surface of a detection device, wherein the spraying device (105, 105a, 105b) comprises at least one fluid distribution channel (130, 143a, 143b) fluidically connected to the at least one conduit; and
- wherein the spraying device (105, 105a, 105b) comprises a jet extending element (135, 144a, 144b) positioned at a downstream end of the at least one fluid distribution channel (130, 143a, 143b) and configured to create a disturbance in the jet of the washing fluid at the downstream end such that the jet is widened.

2. The wiper blade (100) as claimed in claim 1, wherein the jet extending element (135, 144a, 144b) is configured to extend the jet of washing fluid at least radially with respect to a central axis of the downstream end of the at least one fluid distribution channel (130, 143a, 143b).

3. The wiper blade (100) as claimed in claims 1 or 2, wherein the jet extending element (135, 144a, 144b) comprises a truncated shaped passage.

4. The wiper blade (100) as claimed in claim 3, wherein the truncated shaped passage has a circular, elliptical, oval, or triangular base.

5. The wiper blade (100) as claimed in any of the preceding claims, wherein the jet extending element comprises a flow dividing element configured to divide a single jet of the washing fluid entering at an upstream end (132a) of the at least one fluid distribution channel (130) into one or more output jets of the washing fluid discharging from the downstream end (132b) of the corresponding fluid distribution channel (130).

6. The wiper blade (100) as claimed in claim 5, wherein the flow dividing element comprises at least one beam element (147) positioned at least partially across an opening (146) of the at least one fluid distribution channel (130) at its downstream end.

7. The wiper blade as claimed in claim 5, wherein the flow dividing element comprises a plurality of beam elements (148) arranged in different directions at least partially across an opening (146) of the at least one fluid distribution (130) channel at its downstream end.

8. The wiper blade (100) as claimed in claim 1, wherein the spraying device (105a) comprises two fluid distribution channels fluidically connected to the at least one conduit, wherein
- a first fluid distribution channel (143a) is fluidically connected to a first jet extending element (144a) at a downstream end of the first fluid distribution channel (143a) to spray a first jet of washing fluid over the optical surface; and
- a second fluid distribution channel (143b) is fluidically connected to a second jet-extending element (144b) at a downstream end of the second fluid distribution channel (143b) to spray a second jet of washing fluid over the optical surface.

9. The wiper blade (100) as claimed in claim 8, wherein the first and the second jet extending elements (144a, 144b) are the same.

10. The wiper blade (100) as claimed in claim 8, wherein the first and the second jet extending elements (144a, 144b) are different.

11. The wiper blade (100) as claimed in any one of preceding claims, wherein the spraying device (105c, 105d, 105e) comprises a fluid flow control element arranged on at least a portion of the at least one fluid distribution channel (130), and configured to modify the flow of the washing fluid passing through the at least one fluid distribution channel (130).

12. A windscreen wiping system comprising at least: a wiper blade (100) according to any one of claims 1 to 11, and a wiper arm to drive the wiper blade (100).

13. A motor vehicle comprising a windscreen wiping system according to preceding claim 12.
